# EUROPÄISCHE PATENTSCHRIFT

(11) **EP 4 463 640 B1**
(45) Veröffentlichungstag und Bekanntmachung des Hinweises auf die Patenterteilung: **10.09.2025**
(21) Anmeldenummer: 22821297.3
(22) Anmeldetag: 30.11.2022
(51) Int. Cl.: F16F 15/12

(54) **PENDELWIPPENDÄMPFER MIT EINER ROTATIONSACHSE FÜR EINEN ANTRIEBSSTRANG**
PENDULUM ROCKER DAMPER WITH AN AXIS OF ROTATION FOR A DRIVE TRAIN
AMORTISSEUR À BASCULE PENDULAIRE DOTÉ D'UN AXE DE ROTATION POUR UNE CHAÎNE CINÉMATIQUE

(30) Priorität: 12.01.2022 DE 102022100596
(43) Veröffentlichungstag der Anmeldung: 20.11.2024
(73) Patentinhaber: Schaeffler Technologies AG & Co. KG, 91074 Herzogenaurach (DE)
(72) Erfinder: DAGENBACH, Andreas, 76135 Karlsruhe (DE); WERNER, Olaf, 77815 Bühl (DE); ZHOU, Yang, 76275 Ettlingen (DE); GVOZDEV, Mikhail, 77815 Bühl (DE)
(86) Internationale Anmeldenummer: PCT/DE2022/100894
(87) Internationale Veröffentlichungsnummer: WO 2023/134807

(56) Entgegenhaltungen:
- DE-A1- 1 600 055
- DE-A1- 102014 210 685
- DE-A1- 102014 221 692
- DE-A1- 102019 121 205
- DE-U1- 202021 100 070
- FR-A1- 3 057 323
- JP-A- 2013 190 092

## Beschreibung

Die Erfindung betrifft einen Pendelwippendämpfer mit einer Rotationsachse für einen Antriebsstrang, einen Antriebsstrang mit einem solchen Pendelwippendämpfer, sowie ein Kraftfahrzeug mit einem solchen Antriebsstrang.

Aus dem Stand der Technik sind sogenannte Pendelwippendämpfer bekannt. Beispielsweise sind aus der DE 10 2019 121 204 A1 und der DE 10 2019 121 205 A1 Konzepte bekannt, um die Steifigkeit einer rotierenden Welle beziehungsweise eines rotierenden Wellensystems in einem Antriebsstrang zu modulieren. Diese Pendelwippendämpfer umfassen eine Eingangsseite und eine Ausgangsseite, welche (in beiden Richtungen) drehmomentübertragend miteinander verbunden sind. Zwischengeschaltet sind eine Mehrzahl von Wippen-Elementen (auch als Wippen bezeichnet) und eine Mehrzahl von Energiespeicherelementen. Die Wippen-Elemente sind mittels zumindest eines Wälzkörpers an der Eingangsseite und/oder an der Ausgangsseite relativ verlagerbar abgestützt. Die Wälzkörper sind mittels der Federelemente zwischen der jeweiligen Übersetzungsbahn und komplementären Gegenbahn rein abrollbar eingespannt und werden daher als Rollen bezeichnet. Mittels dieses Pendelwippendämpfers ist der relative Verdrehwinkel zwischen der Eingangsseite und der Ausgangsseite in einen Federweg der Energiespeicherelemente umgewandelt. Mittels der Übersetzungsbahnen und der komplementären Gegenbahnen, welche ein Rampengetriebe bilden und auch als Rollenbahnen bezeichnet sind, ist ein Übersetzungsverhältnis einstellbar und damit eine Steifigkeit des Pendelwippendämpfers einstellbar. Vorteilhaft ist hierbei auch, dass das Übersetzungsverhältnis nicht konstant sein muss, sondern die Steigung des Rampengetriebes über den Verdrehwinkel der Eingangsseite zur Ausgangsseite veränderlich einstellbar ist.

Um die gewünschte Kennlinie des Pendelwippendämpfers unter allen Randbedingungen realisieren zu können, muss sichergestellt sein, dass sich die Rollen zu jeder Zeit in der für sie definierten Position befinden. Dies kann nur dann erreicht werden, wenn nötige Rollenbewegungen relativ zu den angrenzenden Kontaktpartnern, also den Wippen-Elementen und Primärseite, sowie Sekundärseite beziehungsweise deren Rollenbahnen ausschließlich durch eine Abrollbewegung (also ohne überlagernden Schlupf) erfolgen. Aus diesem Grund sind signifikante Gleitbewegungen und ein kompletter temporärer Verlust der Kontaktkraft zwischen Rollen und Rollenbahnen unter allen Umständen zu vermeiden. Wenn dies nicht sichergestellt werden kann, besteht außerdem das Risiko zusätzlicher, durch die unerwünschte Rollenbewegung verursachte Geräusche und stark erhöhtem Verschleiß der Rollen und ihrer Kontaktflächen an den Rollenbahnen. Es hat sich gezeigt, dass im Betrieb bei einem minimalen Verdrehwinkel beziehungsweise bei einem niedrigen Drehmomentniveau, also wenn sich die Rollen in ihrer Ruhelage befinden, ein Spiel vorliegen und damit ein Rasseln auftreten kann. Dieses Rasseln wird beim Einsatz in einem Kraftfahrzeug von einem Fahrzeuginsassen als negative akustische Einwirkung (sogenannte Noise Vibration Harshness) wahrgenommen.

Der Pendelwippendämpfer besitzt Dämpfer-interne Schwingungsmoden. Dabei kann das zumindest eine Wippen-Element grundsätzlich durch die äußere Anregung in Resonanz gebracht werden. Bei einer Mehrzahl von Wippen-Elementen können diese dabei sowohl miteinander in Phase schwingen oder auch gegeneinander. Dabei bestimmt das zumindest eine erste Energiespeicherelement, aber vor allem auch die Kontaktsteifigkeit und Bauteilsteifigkeit die Eigenfrequenzen des Systems. Bei niedriger Last liegt die tiefste gleichphasige Mode in einem Frequenzbereich von 15 Hz [fünfzehn Hertz] bis 40 Hz. In einem Kraftfahrzeug kann somit im Fahrbetrieb eine Anregung stattfinden. Die Schwingungen führen zu einer Modulation der Kontaktkräfte an den Rollen. Wenn die Modulation größer als die vorgehaltene statische Vorspannung ist, kommt es zum Abheben der Rollen und somit zu den oben genannten Problemen.

Die Aufgabe besteht entsprechend darin, ein Abheben von und/oder Gleiten auf zumindest einer ihrer Rollenbahnen aller oder einzelner Rollen infolge dynamischer Effekte zu vermeiden.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft einen Pendelwippendämpfer mit einer Rotationsachse für einen Antriebsstrang, aufweisend zumindest die folgenden Komponenten:
- eine Primärseite, welche mit einem ersten Außenanschluss drehmomentübertragend verbunden ist;
- zumindest ein Wippen-Element;
- zumindest ein erstes Energiespeicherelement zum Ausüben einer ersten Vorspannkraft;
- zumindest eine Rolle; und
- eine Sekundärseite, welche mit einem zweiten Außenanschluss drehmomentübertragend verbunden ist,
wobei die zumindest eine Rolle auf einer wippenseitigen Rollenbahn und einer zu der wippenseitigen Rollenbahn komplementären außenseitigen Rollenbahn abrollbar gelagert und mittels der ersten Vorspannkraft des zumindest einen ersten Energiespeicherelements gegen die Rollenbahnen vorgespannt ist.

Der Pendelwippendämpfer ist vor allem dadurch gekennzeichnet, dass zumindest ein zweites Energiespeicherelement in der Rolle oder in zumindest einer der Rollenbahnen zum Ausüben einer zweiten Vorspannkraft vorgesehen ist, wobei mittels der zweiten Vorspannkraft die Rolle zumindest in der Ruhelage des ersten Energiespeicherelements bahn-senkrecht gegen zumindest eine der Rollenbahnen vorgespannt ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der Pendelwippendämpfer ist zum Modulieren eines Drehmoments innerhalb des Antriebsstrangs eingerichtet. Das zu übertragende Drehmoment ist im Betrieb um die Rotationsachse ausgerichtet. Dabei ist der Pendelwippendämpfer (bevorzugt rotationssymmetrisch) zu dieser Rotationsachse ausgewuchtet.

Weiterhin ist von dem Pendelwippendämpfer eine Primärseite, welche mit dem ersten Außenanschluss drehmomentübertragend verbunden ist, und eine Sekundärseite, welche mit dem zweiten Außenanschluss drehmomentübertragend verbunden ist, umfasst. Die Primärseite und/oder die Sekundärseite sind bevorzugt scheibenartig oder scheibensegmentartig, besonders bevorzugt mittels Stanzen und/oder Blechumformung, aus Blech gebildet.

Zum Modulieren eines Drehmoments umfasst der Pendelwippendämpfer zumindest ein Wippen-Element, zumindest ein erstes Energiespeicherelement, welches zum Ausüben der ersten Vorspannkraft eingerichtet ist. Das Wippen-Element ist mittels zumindest einer oder mehr (bevorzugt zwei oder drei) Rollen an der Primärseite und/oder der Sekundärseite relativ zu der Umlaufrichtung (beziehungsweise die Umlaufbewegung überlagernd) verschwenkbar, also wippbar, gelagert. Bevorzugt sind zwei Energiespeicherelemente und zwei Wippen-Elemente vorgesehen.

Wenn zwei oder mehr Wippen-Elemente vorgesehen sind, ist das zumindest eine Energiespeicherelement bevorzugt zwischen zwei Wippen-Elementen vorgesehen, wobei eine Wippbewegung der beiden Wippen-Elemente eine Relativbewegung der beiden Wippen-Elemente zueinander resultiert. Aus der Relativbewegung wiederum resultiert eine Veränderung des Energiepotentials des zumindest einen Energiespeicherelements. Wenn zwei Wippen-Elemente vorgesehen sind, sind bevorzugt ein oder zwei Energiespeicherelement vorgesehen, die bevorzugt an jeweils gegenüberliegenden Enden der Wippenelemente angeordnet sind, bei drei Wippen-Elementen bevorzugt drei Energiespeicherelemente. Wenn lediglich ein Wippen-Element vorgesehen ist, ist das Energiespeicherelement bevorzugt zwischen dem Wippen-Element und entweder der Sekundärseite oder der Primärseite angeordnet, sodass sich bei einer aus der Wippbewegung resultierenden Relativbewegung zwischen dem Wippen-Element und der Sekundärseite beziehungsweise der Primärseite das Energiepotential des Energiespeicherelements verändert.

Die zumindest eine Rolle ist dabei derart auf der wippenseitigen Rollenbahn und der dazu komplementären außenseitigen Rollenbahn angeordnet, dass diese sich im Betrieb ohne anliegendes Drehmoment innerhalb der Rollenbahnen in einer Ruhelage befindet und innerhalb der Rollenbahnen abrollbar gelagert sind. Die zumindest eine Rolle ist mittels des zumindest einen Energiespeicherelements beziehungsweise von dessen ausgeübter erster Vorspannkraft gegen die Rollenbahn vorgespannt und bildet somit ein Rampengetriebe aus.

Die Rollenbahnen weisen dabei eine Steigung auf, welche derart gewählt sind, dass zum Überwinden der Steigungen zusätzliche (Bewegungs-) Energie beziehungsweise Arbeit aufzuwenden ist. Die benötigte (Bewegungs-) Energie ist mittels Reduktion einer Torsionsschwingung beziehungsweise des zu modulierenden Drehmoments erzielbar. Beispielsweise ist mittels der Steigung der Rollenbahnen und/oder der Steifigkeit des Energiespeicherelements, damit einhergehend der Betrag der ersten Vorspannkraft, eine Steifigkeit beziehungsweise ein Dämpfungswert darstellbar beziehungsweise einstellbar. Somit ist eine modulierte Drehmomentübertragung von der Primärseite zu der Sekundärseite oder umgekehrt ausführbar. Das zumindest eine Energiespeicherelement ist beispielsweise eine Schraubendruckfeder, beispielsweise mit gerader Federachse, eine Bogenfeder, oder ein Gasdruckspeicher. Das Energiespeicherelement ist durch eine Relativbewegung der Primärseite und der Sekundärseite zueinander dehnbar oder stauchbar.

Hier ist nun vorgeschlagen, dass der Pendelwippendämpfer zumindest ein zweites Energiespeicherelement umfasst, wobei das zweite Energiespeicherelement zum Ausüben einer zweiten Vorspannkraft eingerichtet ist. Die zweite Vorspannkraft ist derart orientiert, dass die zumindest eine Rolle bahn-senkrecht gegen zumindest eine der Rollenbahnen vorgespannt ist. Es sei darauf hingewiesen, dass die Rolle zu der jeweiligen Rollenbahn einen Kontakt (in Form von beispielsweise einer Linie) bildet. Eine Linie durch das Rollenzentrum der jeweiligen Rolle und den Kontakt ist bahn-senkrecht. Eine Linie orthogonal dazu ist bahn-tangential. Weil mittels der Rollen das anliegende Moment zu übertragen beziehungsweise abzustützen ist, ergibt sich eine resultierende Kraftkomponente aller Rollen in tangentialer Richtung. In einer Ausführungsform ist das zweite Energiespeicherelement von einer gezielt eingestellten Materialsteifigkeit, einer Festkörperfeder, einer Druckfeder, einer Zugfeder oder einer Hebelfeder gebildet. Das zweite Energiespeicherelement ist beispielsweise (bezogen auf die Rotationsachse des Pendelwippendämpfers) radial-außen abgestützt und radial-innerhalb mit der zumindest einen Rolle kraftübertragend verbunden. Alternativ ist das zweite Energiespeicherelement beispielsweise radial-innen abgestützt und radial-außerhalb mit der zumindest einen Rolle kraftübertragend verbunden. Somit ist die zumindest eine Rolle radial gegen die korrespondierende radial-innere und/oder radial-äußere Rollenbahn vorgespannt. In einer bevorzugten Ausführungsform ist die zumindest eine Rolle von dem zweiten Energiespeicherelement, welches beispielsweise als ein Federblech ausgebildet ist, von radial-innen gegen die radial-äußere Rollenbahn (oder umgekehrt) vorgespannt.

Bauteiltoleranzen können zu einer Reduktion der Vorspannung führen, was das Problem zusätzlich verschärft. In einer Ausführungsform weist die Rolle daher ein Übermaß auf, sodass sich daraus eine gezielte zweite Vorspannkraft ergibt, beispielsweise unter Berücksichtigung von den Extrema infolge von Fertigungstoleranzen.

Mit diesem zumindest einen zweiten Energiespeicherelement ist ausgeglichen, dass in der Ruhelage (auch als Neutrallage bezeichnet) die Kraft des ersten Energiespeicherelements minimal ist und damit die Neigung zum Rasseln maximal ist. Mittels des zweiten Energiespeicherelements ist eine minimale Vorspannkraft sichergestellt. Damit ist die Möglichkeit eröffnet, ein erstes Energiespeicherelement derart auszulegen, dass in der Ruhelage die erste Vorspannkraft sehr gering ist, und zwar so gering, dass eine Vorspannkraft auf die Rolle infolge von konstruktiv bedingtem beziehungsweise Toleranz-bedingt Spiel zu gering ist, um ein Rasseln zu unterdrücken. Mittels des zweiten Energiespeicherelements ist dies unabhängig von der Auslegung der ersten Vorspannkraft stets mit einfachen Mitteln sicherstellbar. Somit ist ein Toleranzausgleich erzielbar, sodass die Vorspannungsverluste im Toleranzfall minimiert werden.

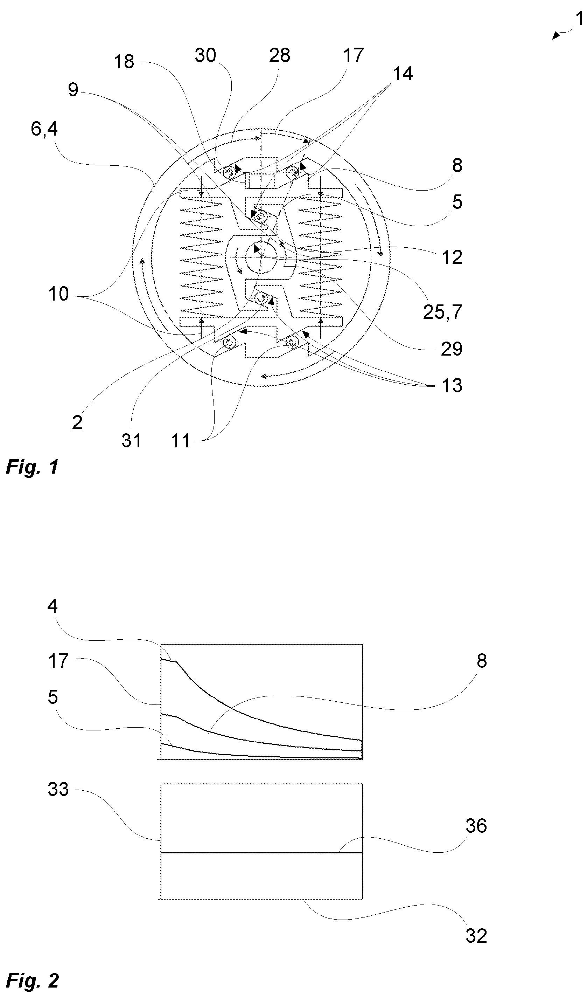

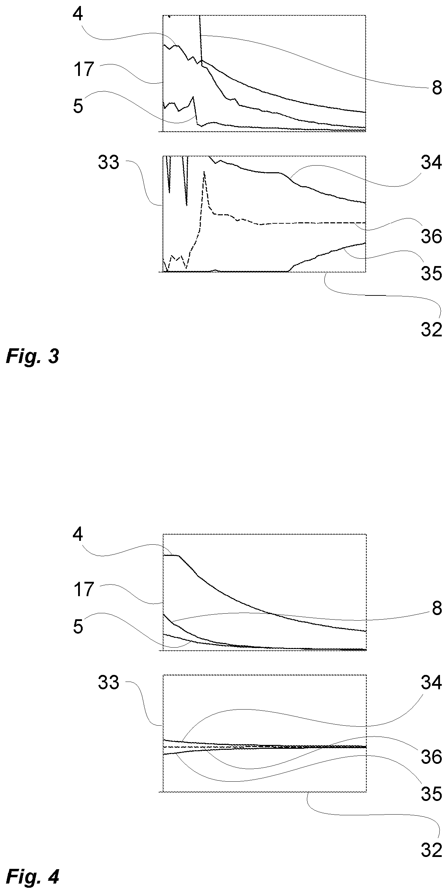

Gemäß einem weiteren Aspekt ist mittels des zweiten Energiespeicherelements eine Eigenfrequenz des Pendelwippendämpfers, und vor allem des frei beweglichen Wippen-Elements, veränderbar. Hier ist vorgeschlagen, im relevanten Lastbereich mittels des zweiten Energiespeicherelements gezielte Elastizitäten in das System einzubringen. Die Elastizitäten verschieben die problematischen Eigenfrequenzen hin zu niedrigen Frequenzen, sodass diese im Betrieb nicht mehr angeregt werden können. Die Folge ist, dass eine robuste Funktion erzielbar ist, auch im Hinblick auf Dynamik unter allen Toleranzbedingungen. Dies ist beispielhaft in der Simulation bestätigt, deren Graph in Fig. 2 (im Vergleich zu Fig. 3) dargestellt ist.

Es sei darauf hingewiesen, dass die zweite Vorspannkraft in einer Ausführungsform einzig bahn-senkrecht ausgerichtet ist. Damit wird die Rolle (zumindest in der Ruhelage) bahn-senkrecht auf die entsprechende Rollenbahn vorgespannt. Alternativ oder zusätzlich umfasst die zweite Vorspannkraft neben der bahn-senkrechten Kraftkomponente eine bahn-tangentiale Kraftkomponente. Die zweite Vorspannkraft umfasst nie allein eine bahn-tangentiale Kraftkomponente.

In einer ersten Ausführungsform sind eine oder eine Mehrzahl von Rollen innerhalb des Pendelwippendämpfers gegenüber einem oder beiden Kontaktpartnern angefedert. In einer zweiten Ausführungsform sind der Radius der Rollen und/oder die Form der betreffenden Rollenbahn so gewählt, dass eine definierte zweite Vorspannkraft innerhalb der Kontakte entsteht. In einer dritten Ausführungsform sind die resultierende Anfederungssteifigkeit und die Vorspannung so gewählt, dass erwartete Toleranzen in Kombination mit erwarteten dynamischen Relativbewegungen zwischen Rollen und Kontaktpartnern nicht zu einem Verschwinden der Kontaktkräfte führen können. In einer vierten Ausführungsform ist die resultierende Anfederungssteifigkeit so gewählt, dass daraus resultierende Resonanzen im Fahrbereich nicht angeregt werden können. In einer fünften Ausführungsform wird jene durch die Anfederung verursachte Veränderung der Steifigkeitskennlinie in der Auslegung berücksichtigt. In einer Ausführungsform sind zumindest zwei der vorgenannten Eigenschaften vereint.

Es wird weiterhin in einer vorteilhaften Ausführungsform des Pendelwippendämpfers vorgeschlagen, dass mittels zumindest einer Rollenbahn eine zweite Vorspannkraft auf die zugehörige Rolle ausgeübt ist,
wobei bevorzugt die Rollenbahn ein steiferes Material als das zweite Energiespeicherelement aufweist.

Hier ist vorgeschlagen, dass von der (betreffenden) Rollenbahn selbst das zweite Energiespeicherelement gebildet ist und somit die zweite Vorspannkraft von der Rollenbahn selbst auf die zugehörige Rolle ausgeübt ist. In einer Ausführungsform ist zwischen dem jeweiligen Element (Wippen-Element, Primärseite oder Sekundärseite) und der Rollenbahn ein separates Federelement eingebracht. Alternativ ist die Rollenbahn selbst aus einem Material mit einer geeigneten (geringen) Steifigkeit ausgeführt. In einer Ausführungsform ist die Rollenbahn von einem separaten Material gebildet, welches mit dem Grundkörper des jeweiligen Elements verbunden ist, beispielsweise ein Kunststoff (wie beispielsweise Polyamid [PA]), welcher bevorzugt mittels Aufspritzen mit dem Grundkörper verbunden ist.

In einer vorteilhaften Ausführungsform ist dabei die Rollenbahn selbst aus einem steiferen Material gebildet als das zweite Energiespeicherelement, sodass ein Einsinken der Rolle in die Rollenbahn unterbunden ist. Wenn die Rolle in die Rollenbahn einsinkt, so entsteht eine Hürde, welche von der Rolle zunächst überwunden werden muss. Dies ist in vielen Fällen zum Vermeiden von Schlupf unerwünscht. In einer Ausführungsform ist die Rollenbahn gehärtet (und die Rolle beziehungsweise deren Oberfläche nicht).

Es wird weiterhin in einer vorteilhaften Ausführungsform des Pendelwippendämpfers vorgeschlagen, dass das Wippen-Element mittels jeweils zumindest einer Rolle an der Primärseite und an der Sekundärseite abgestützt ist, und das zweite Energiespeicherelement zwischen den wippenseitigen Rollenbahnen angeordnet ist, zum jeweils die zweite Vorspannkraft auf die zumindest zwei Rollen Ausüben.

Hier ist vorgeschlagen, dass ein zweites Energiespeicherelement für beide wippenseitigen Rollenbahnen eingerichtet ist. Hierbei ist beispielsweise zentral in dem Wippen-Element dieses zweite Energiespeicherelement angeordnet, sodass das Wippen-Element auseinander gedrückt ist und damit mit seinen (wippenseitigen) Rollenbahnen gegen die beiden Rollen, also einmal gegen die Primärseite und einmal gegen die Sekundärseite, drückt. Ein solches zweites Energiespeicherelement ist beispielsweise eine Schraubendruckfeder oder eine Blattfeder.

Es wird weiterhin in einer vorteilhaften Ausführungsform des Pendelwippendämpfers vorgeschlagen, dass die zweite Vorspannkraft des zweiten Energiespeicherelements eine von einem Verdrehwinkel zwischen der Primärseite und der Sekundärseite abhängig veränderliche Federsteifigkeit aufweist.

Hier ist vorgeschlagen, dass die Federsteifigkeit von einem Verdrehwinkel (zwischen der Primärseite und der Sekundärseite) abhängig ist, sodass die zweite Vorspannkraft nicht über den gesamten Verdrehwinkel konstant ist. Beispielsweise ist die zweite Vorspannkraft dadurch veränderlich, dass ein entsprechendes Federelement auf Anschlag gebracht ist, beispielsweise eine Blattfeder. Beispielsweise ist eine zweite Vorspannkraft dadurch veränderlich, dass das zweite Energiespeicherelement lediglich bereichsweise auf die Rollen beziehungsweise die Rollenbahn wirkend angeordnet ist. Beispielsweise ist die zweite Vorspannkraft dadurch veränderlich, dass das zweite Energiespeicherelement eine lokal abhängig (veränderliche) Steifigkeit aufweist, wobei das zweite Energiespeicherelement dann bevorzugt rollenbahnseitig angeordnet ist und beispielsweise aus einer Mehrzahl von einzelnen Federelementen zusammengesetzt ist. Alternativ ist beispielsweise eine lokal abhängige Steifigkeit des zweiten Energiespeicherelements dadurch geschaffen, dass eine gewölbte (beidseitig eingespannte) Blattfeder eingesetzt ist, welche in ihrem Maximum der Erstreckung aus der zugehörigen Rollenbahn heraus einen maximalen Federweg aufweist und außerhalb dieses Maximums der Wölbung einen geringeren Federweg aufweist und somit im Vergleich zu dem Maximum der Wölbung frühzeitiger auf Anschlag gebracht ist.

In einer Ausführungsform ist das zweite Energiespeicherelement als Kragarm ausgeführt, besonders bevorzugt aus einem Federblech, wobei bevorzugt der Kragarm neben seiner veränderlichen Federwirkung abhängig von der Position auf dem Kragarm zudem lokal begrenzt auf die Rolle beziehungsweise Rollenbahn einwirkt.

In einer Ausführungsform ist das zweite Energiespeicherelement als Kragarm aus einem Federblech ausgeführt und derart eingerichtet, dass dieses seine für die zweite Vorspannkraft erforderliche Federsteifigkeit mittels einer Biegeverformung eines Kragarms aufweist. Die Federsteifigkeit gibt dabei das Verhältnis der auf einen Federblech wirkenden Kraft (hier die zweite Vorspannkraft) zur dadurch bewirkten Auslenkung des Federblechs an. Die Federsteifigkeit des zweiten Energiespeicherelements ist dabei derart ausgeführt, dass diese eine vorbestimmte Federsteifigkeit in Richtung der zweiten Vorspannkraft aufweist.

Der Kragarm ist bevorzugt derart eingesetzt beziehungsweise orientiert, dass bei einem Verdrehwinkel (zwischen der Primärseite und der Sekundärseite) ungleich null, wenn also die erste Vorspannkraft des zumindest einen ersten Energiespeicherelements erhöht ist, sich die zweite Vorspannkraft verringert. Umgekehrt also die zur Ruhelage hin abnehmende erste Vorspannkraft zumindest ausreichend kompensierbar ist. Somit ist die zumindest eine Rolle im Betrieb stets gegen eine entsprechende Rollenbahn vorgespannt.

Es wird weiterhin in einer vorteilhaften Ausführungsform des Pendelwippendämpfers vorgeschlagen, dass zumindest eines der zweiten Energiespeicherelemente von einer der Rollen umfasst ist,
wobei bevorzugt jede der Rollen eines der zweiten Energiespeicherelemente umfasst.

In dieser Ausführungsform weist zumindest eine der Rollen selbst das zweite Energiespeicherelement auf, wobei dieses beispielsweise um den Umfang herum gebildet ist, beispielsweise als Kunststoffüberzug oder als einzelne sich radial aus einem Rollenzentrum heraus erstreckende Elemente. Die einzelnen Elemente sind bevorzugt mit unterschiedlicher Federsteifigkeit und/oder unterschiedlicher maximaler Federweglänge gestaltbar, sodass auch hier mit einer von dem Verdrehwinkel zwischen der Primärseite und der Sekundärseite abhängige Steifigkeit abbildbar ist.

Es wird weiterhin in einer vorteilhaften Ausführungsform des Pendelwippendämpfers vorgeschlagen, dass zumindest eines der zweiten Energiespeicherelemente die zweite Vorspannkraft lokal begrenzt auf die zugehörige Rolle ausübend angeordnet ist.

Bei dieser Ausführungsform ist (wie bereits oben in anderem Zusammenhang erläutert) eine Abhängigkeit der zweiten Vorspannkraft von dem Verdrehwinkel zwischen der Primärseite und der Sekundärseite geschaffen, indem das zweite Energiespeicherelement einzig lokal begrenzt auf die jeweilige Rolle wirkt. Beispielsweise ist das zweite Energiespeicherelement derart eingerichtet, dass es mit seiner zweiten Vorspannkraft lediglich in der oder im Bereich der Ruhelage auf die jeweilige Rolle einwirkend angeordnet ist. Außerhalb der Ruhelage beziehungsweise außerhalb eines Bereichs der Ruhelage wirkt auf die Rolle keine zweite Vorspannkraft ein. Das zweite Energiespeicherelement ist hierzu in die jeweilige Rollenbahn integriert oder ein separates Element, welches parallel zu der Rollenbahn auf die jeweilige Rolle einwirkt.

Es sei darauf hingewiesen, dass nicht generell keine Vorspannkraft auf eine Rolle wirkt, wenn diese sich außerhalb der lokal begrenzten Zone befindet. Vielmehr ist einzig diejenige von dem zweiten Energiespeicherelement ausgehende Vorspannkraft nicht mehr wirksam oder zumindest gegenüber anderen anliegenden Kräften vernachlässigbar.

Es wird weiterhin in einer vorteilhaften Ausführungsform des Pendelwippendämpfers vorgeschlagen, dass von dem Wippen-Element zum Verlagern seines Schwerpunkts eine Zusatzmasse umfasst ist.

Verstärkend für eine Resonanzschwingung wirken eine asymmetrische Krafteinleitung beziehungsweise Abstützung oder auch eine ungünstige Lage des Schwerpunktes eines Wippen-Elements.

Hier ist vorgeschlagen, dass das Wippen-Element eine Zusatzmasse umfasst. Diese Zusatzmasse ist beispielsweise eine separat angebrachte Masse und/oder eine entsprechende Formgebung des Wippen-Elements. Diese Zusatzmasse ist also nicht zwangsläufig als solche erkennbar. Vielmehr ist die Zusatzmasse eine Masse, welche für die sonstigen Aufgaben des Wippen-Elements, also die Kraftübertragung und die Bereitstellung der Rollenbahnen und Anschläge zu dem zumindest einen ersten Energiespeicherelement, überflüssig ist. Ziel einer solchen Zusatzmasse ist es, den Schwerpunkt des Wippen-Elements derart zu verlagern, dass die Eigenfrequenz des Wippen-Elements in seiner Aufhängung in dem Pendelwippendämpfer verändert ist.

Die Verlagerung des Schwerpunkts des Wippen-Elements verändert die dynamische Trägheit (Satz von Steiner) und somit die Eigenfrequenz des Systems.

Um den Kippanteil des Wippen-Elements in der relevanten Schwingungsmode zu reduzieren, wird der Schwerpunkt des Wippen-Elements mittels der Zusatzmasse in einen optimalen Punkt bezüglich der Krafteinleitungspunkte gebracht.

Gemäß einem weiteren Aspekt wird ein Antriebsstrang vorgeschlagen, aufweisend zumindest die folgenden Komponenten:
- zumindest eine Antriebsmaschine zum Abgeben eines Drehmoments;
- zumindest einen Verbraucher zum Aufnehmen eines Drehmoments;
- ein Getriebe zum Übertragen eines Drehmoments zwischen der zumindest einen Antriebsmaschine und einem Verbraucher; und
- einen Pendelwippendämpfer nach einer Ausführungsform gemäß der obigen Beschreibung,
wobei mittels des Pendelwippendämpfers ein Drehmoment zwischen der zumindest einen Antriebsmaschine und dem Verbraucher moduliert übertragbar ist.

Der hier vorgeschlagene Antriebsstrang umfasst eine erste Antriebsmaschine, beispielsweise eine Verbrennungskraftmaschine mit einer Verbrennerwelle und ein Getriebe zum Übertragen eines Drehmoments zwischen der Verbrennerwelle und einem Verbraucher, beispielsweise in einem Kraftfahrzeug die Vortriebsräder. Mittels des Pendelwippendämpfers, welcher nach einer Ausführungsform gemäß der obigen Beschreibung ausgeführt ist, ist die Drehmomentübertragung zwischen der Verbrennungskraftmaschine und dem Verbraucher übertragbar. Eine Drehmomentübertragung zwischen dem Verbraucher und der Verbrennerwelle ist bevorzugt in beiden Richtungen möglich, beispielsweise in einem Kraftfahrzeug zum Beschleunigen des Kraftfahrzeugs (Zugbetrieb) und in Gegenrichtung (Schubbetrieb) beispielsweise zum Einsatz der Motorbremse zum Entschleunigen des Kraftfahrzeugs oder zur Rekuperation dieser Entschleunigungsenergie.

In einer bevorzugten Ausführungsform des Antriebsstrangs ist weiterhin eine elektrische Antriebsmaschine mit einer Rotorwelle in den Drehmomentfluss ausgangsseitig des Pendelwippendämpfers und vor den Verbraucher geschaltet. Beispielsweise ist so bei geöffneter Kupplung ein rein elektrischer Betrieb der Verbraucher ermöglicht. In einer Ausführungsform bilden die elektrische Antriebsmaschine und die Kupplung (mit dem oder ohne den Pendelwippendämpfer) gemeinsam ein sogenanntes Hybrid-Modul, welches als eine Baueinheit in den Antriebsstrang einfach integrierbar ist.

Mit dem hier vorgeschlagenen Antriebsstrang, welcher den oben beschriebenen Pendelwippendämpfer umfasst, sind verringerte Torsionsschwingungen und akustische Störgeräusche innerhalb der Verbrennungskraftmaschine und dem Getriebe beziehungsweise dem Pendelwippendämpfer erzielbar. Bevorzugt wird weiterhin ein Gleiten einer Rolle mittels einer sichergestellten minimalen Vorspannung und Verschiebung der Eigenfrequenz in unkritische Bereiche auch unter dynamischen Bedingungen sicher unterbunden.

Gemäß einem weiteren Aspekt wird ein Kraftfahrzeug vorgeschlagen, aufweisend einen Antriebsstrang nach einer Ausführungsform gemäß der obigen Beschreibung und zumindest ein Vortriebsrad, wobei zum Vortrieb des Kraftfahrzeugs das zumindest eine Vortriebsrad mittels des Antriebsstrangs antreibbar ist.

Der Bauraum ist gerade bei Kraftfahrzeugen aufgrund der zunehmenden Anzahl von Komponenten besonders gering und es ist daher besonders vorteilhaft, einen Antriebsstrang kleiner Baugröße zu verwenden. Mit dem gewünschten sogenannten Downsizing der Antriebsmaschine bei einer gleichzeitigen Verringerung der Betriebsdrehzahlen wird die Intensität der störenden Torsionsschwingungen erhöht. Eine ähnliche Problemstellung ergibt sich bei der sogenannten Hybridisierung, bei welcher eine elektrische Antriebsmaschine im Betrieb immer häufiger in Einsatz gebracht wird oder sogar die Hauptdrehmomentquelle bildet und eine möglichst kleine Verbrennungskraftmaschine einzusetzen ist, welche aber deutlich häufiger dem Antriebsstrang zugeschaltet und wieder weggeschaltet werden muss. Es ist daher eine Herausforderung, eine ausreichende Vergleichmäßigung von Drehungleichförmigkeiten bei gleichzeitig geringen Teilekosten und geringem verfügbarem Bauraum bereitzustellen.

Verschärft wird diese Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner.

Bei dem hier vorgeschlagenen Kraftfahrzeug, dessen Antriebsstrang den oben beschriebenen Pendelwippendämpfer umfasst, sind verringerte Torsionsschwingungen und verringerte akustische Störgeräusche innerhalb der Verbrennungskraftmaschine und dem Getriebe beziehungsweise dem Pendelwippendämpfer erzielbar. Bevorzugt wird weiterhin ein Gleiten einer Rolle mittels einer sichergestellten minimalen Vorspannung und Verschiebung der Eigenfrequenz in unkritische Bereiche auch unter dynamischen Bedingungen sicher unterbunden.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Audi A1, Volkswagen Polo, Opel Corsa oder Renault Clio. Bekannte HybridFahrzeuge sind BMW 330e oder der Toyota Yaris Hybrid. Als Mild-Hybride bekannt sind beispielsweise ein Audi A6 50 TFSI e oder ein BMW X2 xDrive25e.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: Pendelwippendämpfer um eine Rotationsachse in einer schematischen Frontansicht;
- Fig. 2:: ein Diagramm des Übertragungsverhaltens der Komponenten in einem idealen Pendelwippendämpfer;
- Fig. 3:: ein Diagramm des Übertragungsverhaltens der Komponenten in einem realen Pendelwippendämpfer ohne zweites Energiespeicherelement;

- Fig. 4:: ein Diagramm des Übertragungsverhaltens der Komponenten in einem realen Pendelwippendämpfer mit zweitem Energiespeicherelement;
- Fig. 5:: Detailansicht des Pendelwippendämpfers mit einem zweiten Energiespeicherelement gemäß Fig. 1;
- Fig. 6:: in einer Prinzipskizze Rollenbahnen eines Pendelwippendämpfers in einer Ausführungsform mit steifer Rollenbahn:

- Fig. 7:: in einer Prinzipskizze Rollenbahnen eines nicht erfindungsgemäßen Pendelwippendämpfers in einer Ausführungsform mit zentralem zweitem Energiespeicherelement in einem Wippen-Element;
- Fig. 8:: in einer Prinzipskizze Rollenbahnen eines Pendelwippendämpfers in einer Ausführungsform mit weicher Rollenbahn;
- Fig. 9:: in einer Prinzipskizze Rollenbahnen eines Pendelwippendämpfers in einer Ausführungsform mit einer lokal begrenzt vorgespannten Rolle;
- Fig. 10:: in einer Prinzipskizze eine Rolle mit einem zweiten Energiespeicherelement zwischen den Rollenbahnen eines Pendelwippendämpfers;
- Fig. 11:: in einer Prinzipskizze eine Rolle mit einem zweiten Energiespeicherelement zwischen den Rollenbahnen eines Pendelwippendämpfers in einer alternativen Ausführungsform; und
- Fig. 12:: ein Kraftfahrzeug mit einem Antriebsstrang in einer Draufsicht.

In Fig. 1 ist ein Pendelwippendämpfer **1** um eine Rotationsachse **2** in einer schematischen Frontansicht gezeigt. Es sei darauf hingewiesen, dass nicht alle Komponenten des Pendelwippendämpfers **1** mit einem Bezugszeichen versehen sind und pars-prototo teilweise nur eines von mehreren gleichartigen Elementen mit einem Bezugszeichen versehen ist. Die Rotationsachse **2** verläuft darstellungsgemäß in die Bildebene hinein und koaxial zu einem sekundären Außenanschluss **7,** welcher drehmomentfest mit einer Sekundärseite **5** verbunden ist, sowie zu einem primären Außenanschluss **6,** welcher drehmomentfest mit einer Primärseite **4** verbunden ist. Dabei ist der sekundäre Außenanschluss **7** in diesem Ausführungsbeispiel beispielsweise als eine Nabe **25** einer Wellen-Naben-Verbindung ausgeführt und ist beispielsweise zur Aufnahme einer Maschinenwelle **26,27** (hier nicht dargestellt) eingerichtet. Die Primärseite **4** ist beispielsweise als Mitnehmerscheibe einer Kupplungsscheibe ausgeführt oder als Hauptdämpfer mit einer Primärmasse (auch als Schwungrad bezeichnet) verbunden. Axial-außerhalb der Sekundärseite **5** sind zwei Wippen-Elemente **8** angeordnet und mit der Sekundärseite **5** drehmomentübertragend verbunden, wobei die Wippen-Elemente **8** mittels zwei ersten Energiespeicherelementen **9** in einer Ruhelage vorgespannt sind. Die Wippen-Elemente **8** sind mittels (hier rein optional jeweils zwei) primären Rollen **11** an einer Primärseite **4** und einer (hier rein optional jeweils einzigen) sekundären Rolle **12** an der Sekundärseite **5** drehmomentübertragend abrollbar abgestützt. Die Primärseite **4** sowie die Sekundärseite **5** bilden dabei außenseitige Rollenbahnen **14** und die Wippen-Elemente **8** komplementäre wippenseitige Rollenbahnen **13** aus. Zusätzlich umfasst das darstellungsgemäß obere der Wippen-Elemente **8** (rein optional) eine Zusatzmasse **18,** welches zum Verlagern des Schwerpunkts des Wippen-Elements **8** eingerichtet ist. Somit ist die Drehmomentübertragung von der Sekundärseite **5** auf die Primärseite **4** und umgekehrt mittels der Rollen **11,12** und Wippen-Elemente **8** darstellbar.

Bei einer ersten relativen Drehrichtung **28** der Primärseite **4** und einer zweiten relativen Drehrichtung **29,** also bei einem entstehenden relativen Verdrehwinkel **17** zwischen der Primärseite **4** und der Sekundärseite **5,** werden die primären Rollen **11** eine erste Rollendrehrichtung **30** beschreibend, sowie die sekundäre Rolle **12** eine zweite Rollendrehrichtung **31** beschreibend auf dem zugehörigen Wippen-Element **8** abgerollt. Die Rollenbahnen **13,14** sind zum Übersetzen dieser Verdrehung zwischen der Primärseite **4** und der Sekundärseite **5** in eine Stauchung der (ersten) Energiespeicherelemente **9** rampenförmig ausgeführt. Nämlich sind die Rollenbahnen **13,14** derart ausgeführt, dass diese im Zusammenwirken mit den (entsprechend der Anzahl der Wippen-Elemente **8;** hier zwei) ersten Energiespeicherelementen **9,** welche hier rein optional jeweils als Schraubendruckfeder mit gerader Federachse ausgeführt sind, ein Rampengetriebe bilden. Mittels dieses Rampengetriebes und der Federsteifigkeit der Energiespeicherelemente **9** ist über eine entsprechend geformte Rampensteigung über einen Verdrehwinkel **17** ein Drehmoment modulierbar. Beispielsweise ist eine anfänglich und endseitig (also beim maximalen Verdrehwinkel **17)** hohe Steifigkeit und dazwischen eine geringere Verdrehsteifigkeit einstellbar.

Wenn die zwei Energiespeicherelemente **9** gestaucht werden, wird eine erste Vorspannkraft **10** (hier entlang der Wirklinie der Schraubendruckfedern) auf die Wippen-Elemente **8** erhöht. Der Pendelwippendämpfer **1** wird, und vor allem sichtbar von diesem die Wippen-Elemente **8** werden, dabei aus der (hier gezeigten) Ruhelage herausbewegt. Von der ersten Vorspannkraft **10** der ersten Energiespeicherelemente **9** sind zugleich die Rollen **11,12** gegen die Rollenbahnen **13,14** vorgespannt, sodass diese infolge eines anliegenden Drehmoments auf den Rollenbahnen **13,14** nicht schlupfen können und abgerollt werden. Mittels der Steigung der Rollenbahnen **13,14** und/oder der Steifigkeit des ersten Energiespeicherelements **9,** und damit der Betrag der ersten Vorspannkraft **10,** ist eine Verdrehwinkel-abhängige Drehmomentsteifigkeit beziehungsweise Dämpfungswert eingestellt. Somit ist eine modulierte Drehmomentübertragung von der Primärseite **4** zu der Sekundärseite **5** oder umgekehrt ausführbar.

In Fig. 2 ist ein Diagramm des Übertragungsverhaltens der Komponenten in einem idealen Pendelwippendämpfer **1** gezeigt. In den hier gezeigten Diagrammen ist die Abszisse die (nach rechts steigende) Anregungsfrequenz **32.** In dem oberen Diagramm ist auf der Ordinate der Verdrehwinkel **17** aufgetragen, also die Amplitude der Bewegung der jeweiligen Komponente. In dem unteren Diagramm ist auf der Ordinate diejenige auf die (jeweilige) Rolle **11,12** einwirkende (Vorspann-) Kraft **33** aufgetragen. Im oberen Diagramm ist der Verdrehwinkel **17** infolge der Anregung mit der jeweiligen Anregungsfrequenz **32** von der Primärseite **4** (oberste Linie), dem Wippen-Element **8** (mittlere Linie) und der Sekundärseite **5** (unterste Linie) aufgetragen. Diese Komponenten werden bei niedrigen Anregungsfrequenzen **32** maximal angeregt, beispielsweise mit einem Verdrehwinkel **17** von bis zu 2° [zwei Grad von 360°], und streben mit steigender Frequenz eine ruhige Lage an.

In dem unteren Diagramm ist die auf die Rolle **11,12** übertragene (Vorspann-) Kraft **33** über der Anregungsfrequenz **32** konstant und ist größer null. Im idealen Zustand hebt also bei keiner Anregungsfrequenz **32** die Rolle **11,12** ab.

In Fig. 3 ist ein Diagramm des Übertragungsverhaltens der Komponenten in einem realen Pendelwippendämpfer **1** ohne zweites Energiespeicherelement **15** gezeigt. Im Vergleich zu den in Fig. 2 gezeigten Diagrammen wird an dem Wippen-Element **8** eine Frequenzüberhöhung beobachtet, weil diese in Resonanz gebracht wird (die Kurve verlässt den dargestellten Ausschnitt, wobei bevorzugt der dargestellte Ausschnitt den maximalen Verdrehwinkel **17** umfasst).

Im unteren (Kraft **33-)** Diagramm ist in der Folge der Schwingung des Wippen-Elements **8** zu erkennen, dass die (Vorspann-) Kraft **33** auf die Rolle **11,12** stark schwankt. Es ist eine obere Hüllkurve (obere Kontaktkraft **34)** und eine untere Hüllkurve (untere Kontaktkraft 35), sowie ein Mittelwert der Kontaktkraft **36** (gestrichelt dargestellt) der Rollen **11,12** dargestellt. Vor allem wird als ein Extremwert von der untere Kontaktkraft **35** ein Wert von null erreicht. Die betreffende Rolle **11,12** wird damit abheben können.

In Fig. 4 ist ein Diagramm des Übertragungsverhaltens der Komponenten in einem realen Pendelwippendämpfer **1** mit zweitem Energiespeicherelement **15** gezeigt. Hier ist an dem Wippen-Element **8** (und den anderen Elementen) fast der gleiche Amplitudengang erzielt wie in Fig. 2 im idealen Zustand erreicht. Eine Frequenzüberhöhung ist nicht zu beobachten.

Im unteren (Kraft **33-)** Diagramm ist in der Folge der Schwingung des Wippen-Elements **8** zu erkennen, dass die (Vorspann-) Kraft **33** auf die Rolle **11,12** nur im unteren Frequenzbereich (zwischen der oberen und unteren Hüllkurve) leicht um einen konstanten Mittelwert schwankt. Ein (niedriger) Extremwert von der untere Kontaktkraft **35** erreicht nicht den Wert von null. Die betreffende Rolle **11,12** wird damit nicht abheben können.

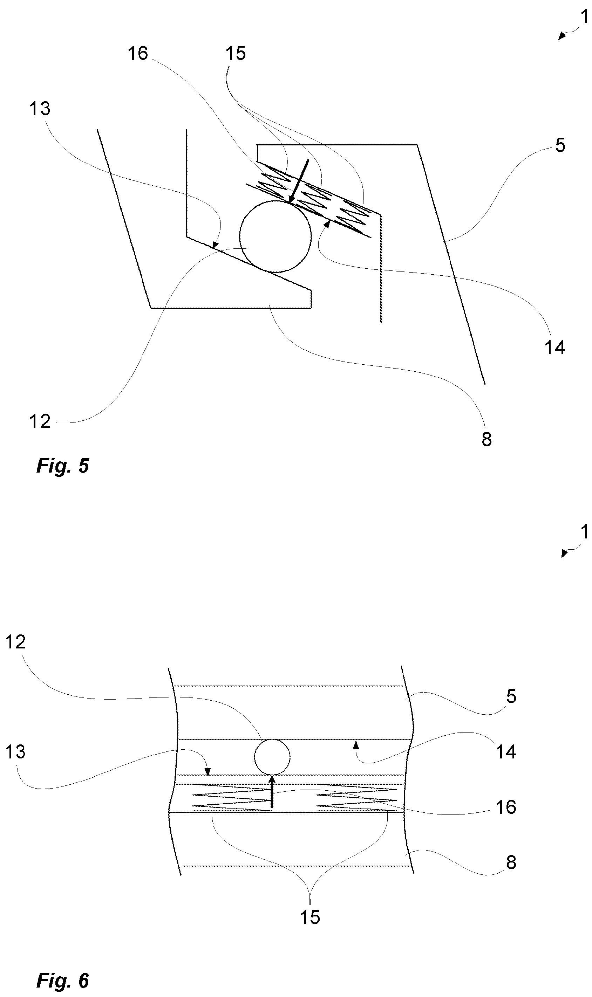

In Fig. 5 ist eine Detailansicht des Pendelwippendämpfers **1** mit einem zweiten Energiespeicherelement **15** gemäß Fig. 1 gezeigt. In dieser Detailansicht ist eine Komponente des Rampengetriebes zwischen der Sekundärseite **5** und einem der Wippen-Elemente **8** dargestellt. Gleichwohl ist das dargestellte Prinzip auch auf die Primärseite **4** und ein Wippen-Element **8** übertragbar. Wenn sich der Pendelwippendämpfer **1 in** der gezeigten Ruhelage befindet, also bei einem Verdrehwinkel **17** von 0° [null Grad von 360°], ist die erste Vorspannkraft **10** minimal, sodass die Rollen **11,12** innerhalb des Pendelwippendämpfers **1** zum Abheben neigen können. Das Abheben der Rollen **11,12** resultiert beispielsweise aus einem toleranzbedingten Spiel und/oder einer zu geringen ersten Vorspannkraft **10** der (ersten) Energiespeicherelemente **9.** Um das Abheben in der Ruhelage zu unterbinden, ist (hier rein optional) an der Sekundärseite **5** ein zweites Energiespeicherelement **15** angeordnet, wobei das zweite Energiespeicherelement **15** an einem Ende fest mit der Sekundärseite **5** verbunden ist und an dem gegenüberliegenden Ende die außenseitige Rollenbahn **14** ausbildet. Das zweite Energiespeicherelement **15** ist in dieser prinzipiellen Anordnungsdarstellung als eine Mehrzahl von Druckfedern dargestellt. Die resultierende zweite Vorspannkraft **16** ist derart orientiert, dass diese in der Ruhelage des Pendelwippendämpfers 1 die sekundäre Rolle **12** bahn-senkrecht auf die wippenseitige Rollenbahn **13** vorspannt und damit ein Abheben unterbunden ist.

Es sei darauf hingewiesen, dass dieses Ausführungsbeispiel (sowie die folgenden Ausführungsbeispiele gemäß Fig. 6 bis Fig. 7) auch auf eine primäre Rolle **11** übertragbar ist, sowie (soweit für die anderen Ausführungsbeispiele zutreffend) das zweite Energiespeicherelement **15** in der wippenseitigen Rollenbahn **13** und/oder in beiden (einer Rolle **11,12** zugeordneten) Rollenbahnen **13,14** anordenbar ist. Weiterhin sei darauf hingewiesen, dass in einer Ausführungsform das zweite Energiespeicherelement **15** von einer Beschichtung aus einem Material mit einer anderen Elastizität als diejenige des Grundkörpers des Wippen-Elements **8** beziehungsweise der Primärseite **4** oder der Sekundärseite **5** gebildet ist; alternativ oder zusätzlich beispielsweise von einer Blattfeder.

In Fig. 6 sind in einer Prinzipskizze die Rollenbahnen **13,14** eines Pendelwippendämpfers **1** (beispielsweise gemäß Fig. 1) in einer Ausführungsform mit steifer Rollenbahn **13,14** gezeigt. Im Unterschied zu dem Ausführungsbeispiel gemäß Fig. 5 ist die wippenseitige Rollenbahn **13** von einem separaten starren Element gebildet. Die mittels des zweiten Energiespeicherelements **15** (hier von zwei Druckfedern repräsentiert) auf die Rolle **12** aufgebrachte zweite Vorspannkraft **16** ist in diesem Ausführungsbeispiel zunächst auf die wippenseitige Rollenbahn **13** übertragen. Aufgrund der Steifigkeit der starren wippenseitigen Rollenbahn **13,** ist die zweite Vorspannkraft **16** vergleichmäßigt über den betrachteten Rollweg der Rolle **12** auf diese aufgebracht. Somit ist auch außerhalb der Ruhelage des Pendelwippendämpfers **1** die zweite Vorspannkraft **16** bahn-senkrecht auf die Rolle **12** aufgebracht, sowie ohne zusätzliche Bauraumforderung ein Einsinken der Rolle **12** in die Rollenbahn **13** unterbunden.

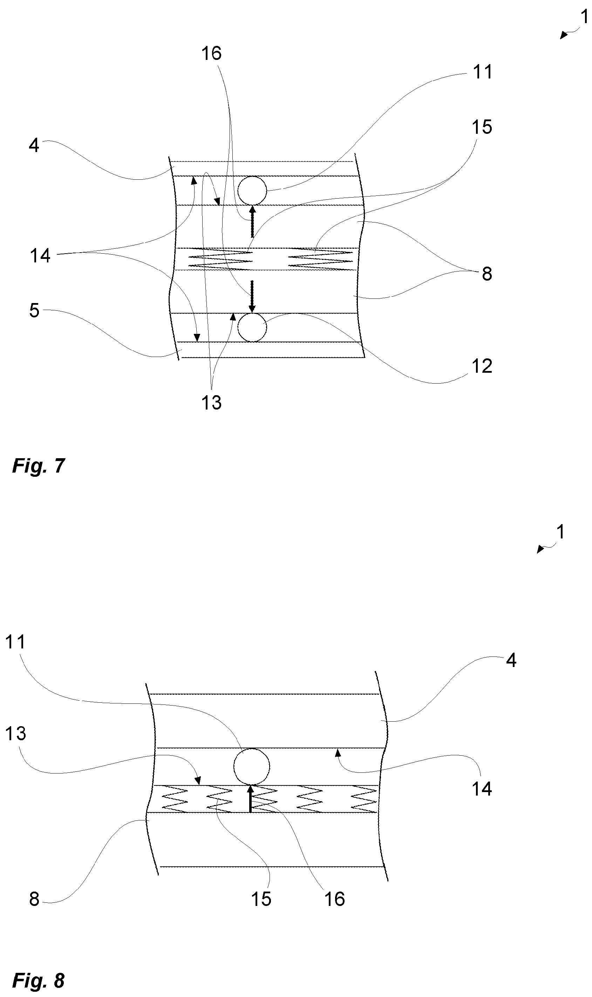

In Fig. 7 sind in einer Prinzipskizze die Rollenbahnen **13,14** eines nicht erfindungsgemäßen Pendelwippendämpfers **1** (beispielsweise gemäß Fig. 1) in einer Ausführungsform mit zentralem zweitem Energiespeicherelement **15** in einem Wippen-Element **8** gezeigt. Der Aufbau ist ähnlich wie in Fig. 6. Im Unterschied zu dem Ausführungsbeispiel gemäß Fig. 6 sind von einem zentralen zweiten Energiespeicherelement **15** beide wippenseitigen Rollenbahnen **13** gegen die jeweiligen Rollen **11,12** vorgespannt. Dies erlaubt eine unter Umständen sehr geringe Bauraumforderung und gegebenenfalls eine geeignete Beeinflussung der Masse beziehungsweise des Schwerpunkts (vergleiche Fig. 1) des betreffenden Wippen-Elements **8.**

In Fig. 8 sind in einer Prinzipskizze die Rollenbahnen **13,14** eines Pendelwippendämpfers 1 (beispielsweise gemäß Fig. 1) in einer Ausführungsform mit weicher Rollenbahn **13,14** gezeigt. Im Unterschied zu dem Ausführungsbeispiel gemäß Fig. 6 ist die wippenseitige Rollenbahn **13** weich ausgeführt. Die zweite Vorspannkraft **16** des zweiten Energiespeicherelements **15** (hier von einer Mehrzahl von Druckfedern repräsentiert) ist in diesem Ausführungsbeispiel nahezu unmittelbar auf die Rolle **11** übertragen. Aufgrund der Mehrzahl der Druckfedern, welche auch als infinitesimal kleine Abschnitte der Rollenbahn **13,14** verstanden werden können, ist eine vom Verdrehwinkel **17** abhängige Steifigkeit einstellbar.

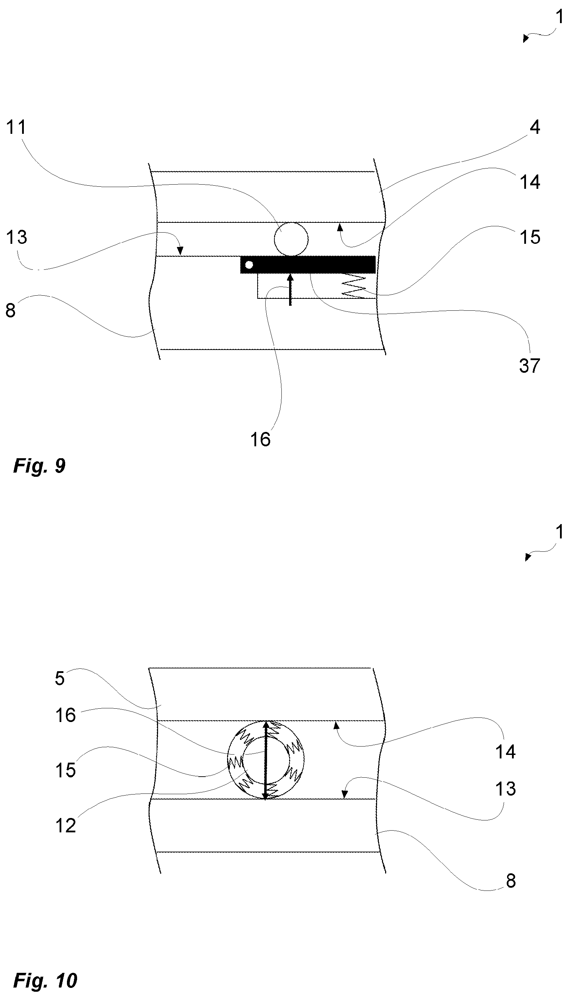

In Fig. 9 sind in einer Prinzipskizze die Rollenbahnen **13,14** eines Pendelwippendämpfers **1** (beispielsweise gemäß Fig. 1) in einer Ausführungsform mit einer lokal begrenzt vorgespannten Rolle **11** gezeigt. Im Unterschied zu den Ausführungsbeispielen gemäß Fig. 5 bis Fig. 8 ist die wippenseitige Rollenbahn **13** in einem Abschnitt von einem separaten (beispielsweise starren) Element gebildet, wobei das separate Element beweglich mit der übrigen Rollenbahn **13** verbunden ist und mittels eines zweiten Energiespeicherelements **15** (hier von einer Druckfeder repräsentiert) hin zu der komplementären (hier außenseitigen) Rollenbahn **14** vorgespannt ist. Die mittels des zweiten Energiespeicherelements **15** und des separaten Elements auf die sekundäre Rolle **12** aufgebrachte zweite Vorspannkraft **16** ist in diesem Ausführungsbeispiel daher lokal begrenzt, sowie (rein optional) abhängig von dem Verdrehwinkel **17** veränderlich, auf die wippenseitige Rollenbahn **13** übertragen. In einer realen Ausführungsform ist das Element beispielsweise von einem Kragarm **37,** bevorzugt aus einem Federstahl (dann nicht starr), gebildet.

In Fig. 10 ist in einer Prinzipskizze eine (optional sekundäre) Rolle **12** mit einem zweiten Energiespeicherelement **15** zwischen den Rollenbahnen **13,14** eines Pendelwippendämpfers 1 (beispielsweise gemäß Fig. 1) gezeigt. In diesem Ausführungsbeispiel ist die Rolle **12** derart ausgeführt, dass diese von dem zweiten Energiespeicherelement **15** (hier rein optional umlaufend) umgeben ist. Aufgrund der symmetrischen Anordnung des zweiten Energiespeicherelements **15** ist die Rolle **12** mittels der zweiten Vorspannkraft **16** sowohl gegen die wippenseitige Rollenbahn **13** als auch gegen die außenseitige Rollenbahn **14** angefedert. Somit ist die Rolle **12** (bei einem konstanten Abstand zwischen außenseitiger Rollenbahn **14** und wippenseitiger Rollenbahn 13) auch außerhalb der Ruhelage gegen beide Rollenbahnen **13,14** vorgespannt.

In diesem Ausführungsbeispiel ist die Rolle **12** starr ausgeführt, beispielsweise aus einem Werkzeugstahl, und das umlaufende zweite Energiespeicherelement **15** ist ebenfalls starr, beispielsweise als ein Federblech, ausgeführt, welches als reale Umsetzung beispielsweise Wellfeder-artig an der Rolle **12** abgestützt ist oder von einem (beispielsweise aufgespritzten) Kunststoff gebildet ist. Es sei darauf hingewiesen, dass dieses Ausführungsbeispiel alternativ oder zusätzlich auch mit einer primären Rolle **11** ausführbar ist. Wenn jeweils nur eine von den Rollen **11,12** derart ausgeführt ist, ist unter Umständen die resultierende zweite Vorspannkraft **16** für die jeweils andere Rolle **12,11** ausreichend. Dies gilt analog auch für die anderen dargestellten Ausführungsbeispiele.

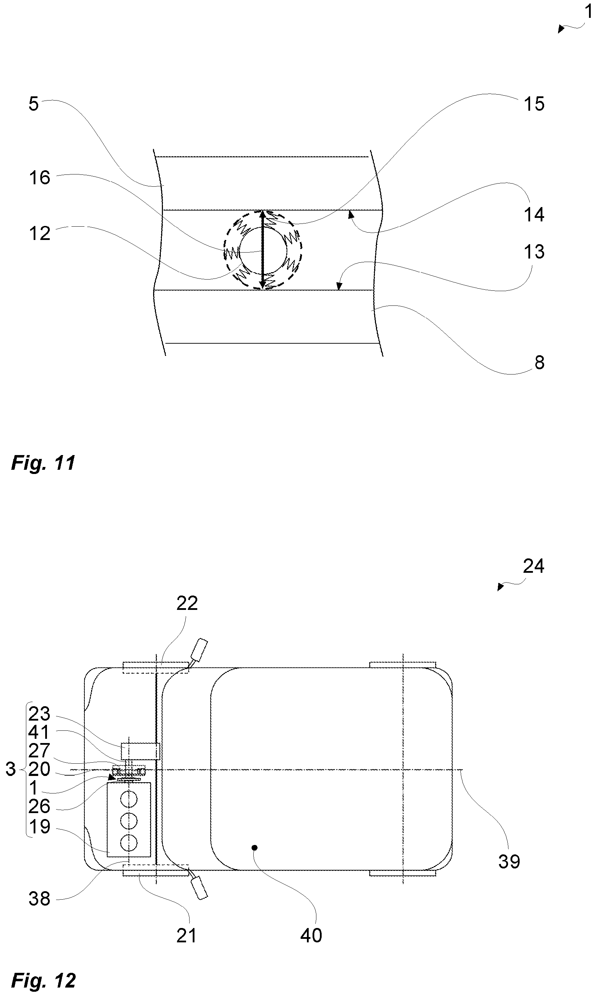

In Fig. 11 ist in einer Prinzipskizze eine Rolle **11** mit einem zweiten Energiespeicherelement **15** zwischen den Rollenbahnen **13,14** eines Pendelwippendämpfers 1 in einer zu der Ausführungsform gemäß Fig. 10 alternativen Ausführungsform gezeigt. Im Unterschied zu dem Ausführungsbeispiel in Fig. 10 sind die Rolle **12** und das zweite Energiespeicherelement **15** einstückig gebildet und insgesamt elastisch ausgeführt. Beispielsweise ist das zweite Energiespeicherelement **15** beziehungsweise die Rolle **12** als ein Elastomer ausgeführt. Somit ist die zweite Vorspannkraft **16** derart aufgebracht, dass die Rolle **12** sowohl gegen die wippenseitige Rollenbahn **13** als auch gegen die außenseitige Rollenbahn **14** vorgespannt ist, wobei die Rolle **12** dabei eine reversible Verformung erfährt.

In Fig. 12 ist ein Kraftfahrzeug **24** mit einem Antriebsstrang 3 in einer Draufsicht schematisch gezeigt, wobei in einer Quer-Front-Anordnung eine erste Antriebsmaschine **19,** beispielsweise eine Verbrennungskraftmaschine **19,** mit ihrer Verbrennerwelle **26** und rein optional eine zweite Antriebsmaschine **20,** beispielsweise eine elektrische Antriebsmaschine **20,** mit einer Rotorwelle **27** entlang der Motorachse **38** und quer zu der Längsachse **39** und vor der Fahrerkabine **40** des Kraftfahrzeugs **24** angeordnet sind. Dieses Konzept wird als Hybridantrieb bezeichnet. Die elektrische Antriebsmaschine **20** ist hier koaxial zu einem Pendelwippendämpfer **1** gemäß Fig. 1 und einer Trennkupplung angeordnet. Der Antriebsstrang **3** ist zum Vortrieb des Kraftfahrzeugs **24** mittels Antreiben eines linken Vortriebsrads **21** und eines rechten Vortriebsrads **22** (hier optional der Vorderachse des Kraftfahrzeugs **24)** mittels einer Drehmomentabgabe von zumindest einer der Antriebsmaschinen **19,20** eingerichtet. Die Drehmomentübertragung von der Verbrennungskraftmaschine **19** (und in einer entsprechenden Konfiguration, beispielsweise P2, auch von der elektrischen Antriebsmaschine **20)** ist mittels der Trennkupplung unterbrechbar und mittels des Pendelwippendämpfers **1** sind Drehungleichförmigkeiten der Verbrennungskraftmaschine **19** frühzeitig im Antriebsstrang **3** reduziert. Die Rotorwelle **27** ist dauerhaft (oder mit einer weiteren nicht dargestellten Drehmomentkupplung trennbar) mit einem Getriebe **23** verbunden, welches beispielsweise als stufenlos veränderbar übersetzendes Umschlingungsgetriebe ausgeführt ist. Für die rein optional hydraulische Betätigung der Trennkupplung ist ein Gebersystem, beispielsweise ein Kupplungspedal in der Fahrerkabine **40** mit einem Geberzylinder vorgesehen, wobei das Gebersystem über die im Betrieb verbundene Getriebeeingangswelle **41** mit dem Nehmersystem kommunizierend verbunden ist. Oftmals unterliegt die Betätigung der Trennkupplung einer Regelung eines Automatikgetriebes [AMT; engl.: Automated Manual Transmission] und/oder eines Hybridantriebsstrangs, wobei beispielsweise die Kohlenstoffdioxid-Emission im Vordergrund steht.

Mit dem hier vorgeschlagenen Pendelwippendämpfer sind Störgeräusche verringerbar und weiterhin ein Gleiten einer Rolle mittels Verschiebung der Eigenfrequenz in unkritische Bereiche sicher unterbunden, indem das zweite Energiespeicherelement 15 in der Rolle 11,12 oder in zumindest einer der Rollenbahnen 13, 14 zum Ausüben einer zweiten Vorspannkraft 16 vorgesehen ist, wobei mittels der zweiten Vorspannkraft 16 die Rolle 11,12 zumindest in der Ruhelage des ersten Energiespeicherelements 9 bahn-senkrecht gegen zumindest eine der Rollenbahnen 13,14 vorgespannt ist.

**Bezugszeichenliste**

| | | | |
|---|---|---|---|
| 1 | Pendelwippendämpfer | 36 | Mittelwert der Kontaktkraft der Rollen |
| 2 | Rotationsachse | | |
| 3 | Antriebsstrang | 37 | Kragarm |
| 4 | Primärseite | 38 | Motorachse |
| 5 | Sekundärseite | 39 | Längsachse |
| 6 | primärer Außenanschluss | 40 | Fahrerkabine |
| 7 | sekundärer Außenanschluss | 41 | Getriebeeingangswelle |
| 8 | Wippen-Element | | |
| 9 | erstes Energiespeicherelement | | |
| 10 | erste Vorspannkraft | | |
| 11 | primäre Rolle | | |
| 12 | sekundäre Rolle | | |
| 13 | wippenseitige Rollenbahn | | |
| 14 | außenseitige Rollenbahn | | |
| 15 | zweites Energiespeicherelement | | |
| 16 | zweite Vorspannkraft | | |
| 17 | Verdrehwinkel | | |
| 18 | Zusatzmasse | | |
| 19 | Verbrennungskraftmaschine | | |
| 20 | elektrische Antriebsmaschine | | |
| 21 | linkes Vortriebsrad | | |
| 22 | rechtes Vortriebsrad | | |
| 23 | Getriebe | | |
| 24 | Kraftfahrzeug | | |
| 25 | Nabe | | |
| 26 | Verbrennerwelle | | |
| 27 | Rotorwelle | | |
| 28 | erste Drehrichtung | | |
| 29 | zweite Drehrichtung | | |
| 30 | erste Rollendrehrichtung | | |
| 31 | zweite Rollendrehrichtung | | |
| 32 | Anregungsfrequenz | | |
| 33 | Kraft auf Rollen | | |
| 34 | obere Kontaktkraft der Rollen | | |
| 35 | untere Kontaktkraft der Rollen | | |

## Patentansprüche

1. Pendelwippendämpfer (1) mit einer Rotationsachse (2) für einen Antriebsstrang (3), aufweisend zumindest die folgenden Komponenten:
- eine Primärseite (4), welche mit einem ersten Außenanschluss (6) drehmomentübertragend verbunden ist;
- zumindest ein Wippen-Element (8);
- zumindest ein erstes Energiespeicherelement (9) zum Ausüben einer ersten Vorspannkraft (10);
- zumindest eine Rolle (11,12); und
- eine Sekundärseite (5), welche mit einem zweiten Außenanschluss (7) drehmomentübertragend verbunden ist,
wobei die zumindest eine Rolle (11,12) auf einer wippenseitigen Rollenbahn (13) und einer zu der wippenseitigen Rollenbahn (13) komplementären außenseitigen Rollenbahn (14) abrollbar gelagert und mittels der ersten Vorspannkraft (10) des zumindest einen ersten Energiespeicherelements (9) gegen die Rollenbahnen (13,14) vorgespannt ist,
**dadurch gekennzeichnet, dass**
zumindest ein zweites Energiespeicherelement (15) in der Rolle (11,12) oder in zumindest einer der Rollenbahnen (13, 14) zum Ausüben einer zweiten Vorspannkraft (16) vorgesehen ist, wobei mittels der zweiten Vorspannkraft (16) die Rolle (11,12) zumindest in der Ruhelage des ersten Energiespeicherelements (9) bahn-senkrecht gegen zumindest eine der Rollenbahnen (13,14) vorgespannt ist.

2. Pendelwippendämpfer (1) nach Anspruch 1, wobei
mittels zumindest einer Rollenbahn (13,14) eine zweite Vorspannkraft (16) auf die zugehörige Rolle (11,12) ausgeübt ist,
wobei bevorzugt die Rollenbahn (13,14) ein steiferes Material als das zweite Energiespeicherelement (15) aufweist.

3. Pendelwippendämpfer (1) nach Anspruch 2, wobei
das Wippen-Element (8) mittels jeweils zumindest einer Rolle (11,12) an der Primärseite (4) und an der Sekundärseite (5) abgestützt ist, und das zweite Energiespeicherelement (15) zwischen den wippenseitigen Rollenbahnen (13) angeordnet ist, zum jeweils die zweite Vorspannkraft (16) auf die zumindest zwei Rollen (11,12) Ausüben.

4. Pendelwippendämpfer (1) nach einem der vorhergehenden Ansprüche, wobei die zweite Vorspannkraft (16) des zweiten Energiespeicherelements (15) eine von einem Verdrehwinkel (17) zwischen der Primärseite (4) und der Sekundärseite (5) abhängig veränderliche Federsteifigkeit aufweist.

5. Pendelwippendämpfer (1) nach einem der vorhergehenden Ansprüche, wobei zumindest eines der zweiten Energiespeicherelemente (15) von einer der Rollen (11) umfasst ist,
wobei bevorzugt jede der Rollen (11) eines der zweiten Energiespeicherelemente (15) umfasst.

6. Pendelwippendämpfer (1) nach einem der vorhergehenden Ansprüche, wobei zumindest eines der zweiten Energiespeicherelemente (15) die zweite Vorspannkraft (16) lokal begrenzt auf die zugehörige Rolle (11) ausübend angeordnet ist.

7. Pendelwippendämpfer (1) nach einem der vorhergehenden Ansprüche, wobei von dem Wippen-Element (8) zum Verlagern seines Schwerpunkts eine Zusatzmasse (18) umfasst ist.

8. Antriebsstrang (3), aufweisend zumindest die folgenden Komponenten:
- zumindest eine Antriebsmaschine (19,20) zum Abgeben eines Drehmoments;
- zumindest einen Verbraucher (21,22) zum Aufnehmen eines Drehmoments;
- ein Getriebe (23) zum Übertragen eines Drehmoments zwischen der zumindest einen Antriebsmaschine (19,20) und einem Verbraucher (21,22); und
- einen Pendelwippendämpfer (1) nach einem der vorhergehenden Ansprüche, wobei mittels des Pendelwippendämpfers (1) ein Drehmoment zwischen der zumindest einen Antriebsmaschine (19,20) und dem Verbraucher (21,22) moduliert übertragbar ist.

9. Kraftfahrzeug (24), aufweisend einen Antriebsstrang (3) nach Anspruch 8 und zumindest ein Vortriebsrad (21,22), wobei zum Vortrieb des Kraftfahrzeugs (24) das zumindest eine Vortriebsrad (21,22) mittels des Antriebsstrangs (3) antreibbar ist.

## Claims

1. A pendulum rocker damper (1) having an axis of rotation (2) for a drive train (3), having at least the following components:
- a primary side (4) connected to a first external connection (6) in a torque-transmitting manner;
- at least one rocker element (8);
- at least one first energy storage element (9) for exerting a first preload force (10);
- at least one roller (11, 12); and
- a secondary side (5) connected to a second external connection (7) in a torque-transmitting manner,
wherein the at least one roller (11, 12) is mounted so as to be rollable on a rocker-side roller track (13) and an outer-side roller track (14) complementary to the rocker-side roller track (13), and is pretensioned against the roller tracks (13, 14) by the first preload force (10) of the at least one first energy storage element (9),
**characterised in that**
at least one second energy storage element (15) is provided in the roller (11, 12) or in at least one of the roller tracks (13, 14) for exerting a second preload force (16), wherein, by means of the second preload force (16), the roller (11, 12) is pretensioned at least in the rest position of the first energy storage element (9), perpendicularly to at least one of the roller tracks (13, 14).

2. The pendulum rocker damper (1) according to claim 1, wherein
a second preload force (16) is exerted on the associated roller (11, 12) by means of at least one roller track (13, 14),
wherein the roller track (13, 14) preferably has a stiffer material than the second energy storage element (15).

3. The pendulum rocker damper (1) according to claim 2, wherein
the rocker element (8) is supported by means of at least one roller (11, 12) on the primary side (4) and on the secondary side (5), and the second energy storage element (15) is
arranged between the rocker-side roller tracks (13) for exerting the second preload force (16) on the at least two rollers (11, 12).

4. The pendulum rocker damper (1) according to one of the preceding claims, wherein the second preload force (16) of the second energy storage element (15) has a spring stiffness that varies depending on a rotation angle (17) between the primary side (4) and the secondary side (5).

5. The pendulum rocker damper (1) according to one of the preceding claims, wherein at least one of the second energy storage elements (15) is comprised by one of the rollers (11),
wherein preferably each of the rollers (11) comprises one of the second energy storage elements (15).

6. The pendulum rocker damper (1) according to one of the preceding claims, wherein at least one of the second energy storage elements (15) is arranged to exert the second preload force (16) locally limited to the associated roller (11).

7. The pendulum rocker damper (1) according to one of the preceding claims, wherein the rocker element (8) comprises an additional mass (18) for shifting its centre of gravity.

8. A drive train (3), having at least the following components:
- at least one drive unit (19, 20) for outputting a torque;
- at least one consumer (21, 22) for receiving a torque;
- a transmission (23) for transmitting a torque between the at least one drive unit (19, 20) and a consumer (21, 22); and
- a pendulum rocker damper (1) according to one of the preceding claims, wherein a torque can be transmitted in a modulated manner between the at least one drive unit (19, 20) and the consumer (21, 22) by means of the pendulum rocker damper (1).

9. A motor vehicle (24), having a drive train (3) according to claim 8 and at least one drive wheel (21, 22), wherein the at least one drive wheel (21, 22) can be driven by means of the drive train (3) for propelling the motor vehicle (24).

## Revendications

1. Amortisseur à bascule pendulaire (1) doté d'un axe de rotation (2) pour une chaîne cinématique (3), présentant au moins les composants suivants :
- un côté primaire (4) qui est relié à un premier raccord externe (6) de façon à transmettre un couple ;
- au moins un élément basculant (8) ;
- au moins un premier élément de stockage d'énergie (9) pour exercer une première force de précontrainte (10) ;
- au moins un rouleau (11, 12) ; et
- un côté secondaire (5) qui est relié à un second raccord externe (7) de façon à transmettre un couple,
dans lequel le ou les rouleaux (11, 12) sont montés de façon à rouler sur une piste de roulement côté bascule (13) et sur une piste de roulement côté externe (14) complémentaire de la piste de roulement côté bascule (13), et sont précontraints contre les pistes de roulement (13, 14) au moyen de la première force de précontrainte (10) du ou des premiers éléments de stockage d'énergie (9),
**caractérisé en ce que**
au moins un second élément de stockage d'énergie (15) est prévu dans le rouleau (11, 12) ou dans au moins l'une des pistes de roulement (13, 14) pour exercer une seconde force de précontrainte (16), au moyen de la seconde force de précontrainte (16) le rouleau (11, 12) étant précontraint perpendiculairement à la piste contre au moins l'une des pistes de roulement (13, 14), au moins dans la position de repos du premier élément de stockage d'énergie (9).

2. Amortisseur à bascule pendulaire (1) selon la revendication 1, dans lequel
une seconde force de précontrainte (16) est exercée sur le rouleau (11, 12) associé au moyen d'au moins une piste de roulement (13, 14),
la piste de roulement (13, 14) comprenant de préférence un matériau plus rigide que le second élément de stockage d'énergie (15).

3. Amortisseur à bascule pendulaire (1) selon la revendication 2, dans lequel
l'élément basculant (8) est supporté respectivement au moyen d'au moins un rouleau (11, 12) sur le côté primaire (4) et sur le côté secondaire (5), et le second élément de stockage d'énergie (15) est agencé entre les pistes de roulement côté bascule (13) afin d'exercer la seconde force de précontrainte (16) sur les au moins deux rouleaux (11, 12).

4. Amortisseur à bascule pendulaire (1) selon l'une quelconque des revendications précédentes, dans lequel la seconde force de précontrainte (16) du second élément de stockage d'énergie (15) présente une rigidité de ressort qui varie en fonction d'un angle de rotation (17) entre le côté primaire (4) et le côté secondaire (5).

5. Amortisseur à bascule pendulaire (1) selon l'une quelconque des revendications précédentes, dans lequel au moins un des seconds éléments de stockage d'énergie (15) est compris par l'un des rouleaux (11),
chacun des rouleaux (11) comprenant de préférence l'un des seconds éléments de stockage d'énergie (15).

6. Amortisseur à bascule pendulaire (1) selon l'une quelconque des revendications précédentes, dans lequel au moins l'un des seconds éléments de stockage d'énergie (15) est agencé pour exercer la seconde force de précontrainte (16) de façon localement limitée sur le rouleau (11) associé.

7. Amortisseur à bascule pendulaire (1) selon l'une quelconque des revendications précédentes, dans lequel l'élément basculant (8) comprend une masse supplémentaire (18) pour déplacer son centre de gravité.

8. Chaîne cinématique (3), présentant au moins les composants suivants :
- au moins une machine d'entraînement (19, 20) pour délivrer un couple ;
- au moins un consommateur (21, 22) pour recevoir un couple ;
- une boîte de vitesses (23) pour transmettre un couple de la ou des machines d'entraînement (19, 20) à un consommateur (21, 22) ; et
- Amortisseur à bascule pendulaire (1) selon l'une quelconque des revendications précédentes, dans lequel un couple peut être transmis de façon modulée de la ou des machines d'entraînement (19, 20) au consommateur (21, 22) au moyen de l'amortisseur à bascule pendulaire (1).

9. Véhicule automobile (24), présentant une chaîne cinématique (3) selon la revendication 8 et au moins une roue d'entraînement (21, 22), la ou les roues d'entraînement (21, 22) pouvant être entraînées au moyen de la chaîne cinématique (3) pour entraîner le véhicule automobile (24).
